(19) Europäisches Patentamt
European Patent Office
Office européen des brevets

(11) EP 1 705 602 A2

(12) EUROPEAN PATENT APPLICATION

(43) Date of publication:
27.09.2006 Bulletin 2006/39

(51) Int Cl.:
G06K 9/36 (2006.01)

(21) Application number: 06002291.0

(22) Date of filing: 03.02.2006

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(30) Priority: 07.02.2005 JP 2005030552

(71) Applicant: KABUSHIKI KAISHA TOSHIBA
Tokyo (JP)

(72) Inventors:
• Ariyoshi, Shunji
Int.Prop.Div. Toshiba Corp.
Minato-ku
Tokyo 105-8001 (JP)

• Irie, Bunpei
Int.Prop.Div. Toshiba Corp.
Minato-ku
Tokyo 105-8001 (JP)

• Akagi, Takuma
Int.Prop.Div. Toshiba Corp.
Minato-ku
Tokyo 105-8001 (JP)

• Hamamura, Tomoyuki
Int.Prop.Div. Toshiba Corp.
Minato-ku
Tokyo 105-8001 (JP)

(74) Representative: Kramer - Barske - Schmidtchen
European Patent Attorneys
Patenta
Radeckestrasse 43
81245 München (DE)

(54) Character recognition apparatus

(57) Character recognition apparatus includes field storage means provided for storing field data indicating specified fields on entry sheets, image scanner provided for reading images appearing on the top side and back-transfer images on the entry sheets, back-transfer image processing means provided for processing back-transfer images in the specified fields read by the image scanner in reference to the field storage means and character recognition means provided for executing character recognitions for the images processed by the back-transfer image processing means.

```
        START
         │
S11 ─ READ OUT ENTRY SHEET FORMAT
         │
S12 ─ READ AND STORE TOP SIDE
      AND BACKSIDE IMAGES
         │
S13 ─ EXTRACT IMAGE FROM DESIGNATED
      FIELD FROM IMAGE MEMORY BY
      REFERRING TO ENTRY SHEET FORMAT
         │
S14 ─ IS THERE BACK-TRANSFER IMAGE ? ──NO──┐
         │ YES                              │
S15 ─ BACK-TRANSFER IMAGE ELIMINATION       │
      PROCESS                               │
         │◄──────────────────────────────────┘
S16 ─ CHARACTOR RECOGNITION PROCESS
         │
S17 ─ IS THERE UNPROCESSED FIELD ? ──YES──►
         │ NO
S18 ─ IS THERE NEXT ENTRY SHEET ? ──YES──►
         │ NO
        END
```

FIG. 4

## Description

This application is based upon and claims the benefit of priority from the prior Japanese Patent Application JP2005-30552 filed on February 7, 2005, the entire content of which is incorporated herein by reference.

The present invention relates to a character recognition apparatus that eliminates back-transfer images entered on entry sheets.

A character recognition apparatus is an equipment to read images entered on entry sheets with a scanner and read characters entered using a pattern recognition technology.

Character recognition apparatus so far available were designed to read characters entered on entry sheets for exclusively used for character recognition apparatus. However, in recent years it becomes possible to read characters entered on general entry sheets not premised to the machine reading.

When characters entered on general entry sheets, especially on thin entry sheets, are recognized by such a character recognition apparatus, characters, figures etc. entered on the backside transfer to the top sides and cause noises and act as factors to deteriorate the character recognition efficiency.

To solve such a problem of backside transfer, many attempts have been made long before. For example, a way for eliminating back-transfer images based on differences between images scanned when the backside of entry sheet is illuminated and other images scanned when the illumination for the backside of entry sheet is halted is disclosed in the Japanese Patent Application Publication No. 1997-135344. Hereinafter this way will be referred as a first way of elimination.

Another way for eliminating back-transfer images based on a difference between images scanned the top side and the backside of entry sheet is disclosed in the Japanese Patent Application No. 2003-78766. Hereinafter this way will be referred as a second way of elimination.

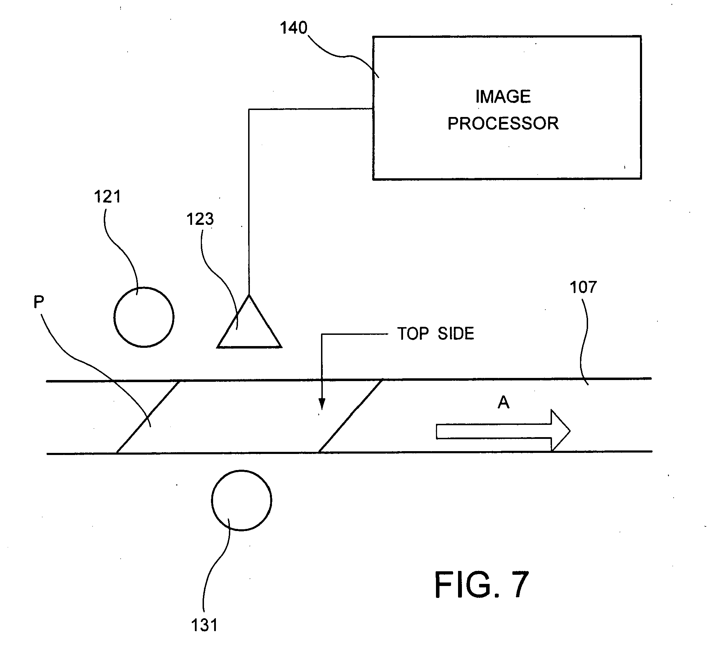

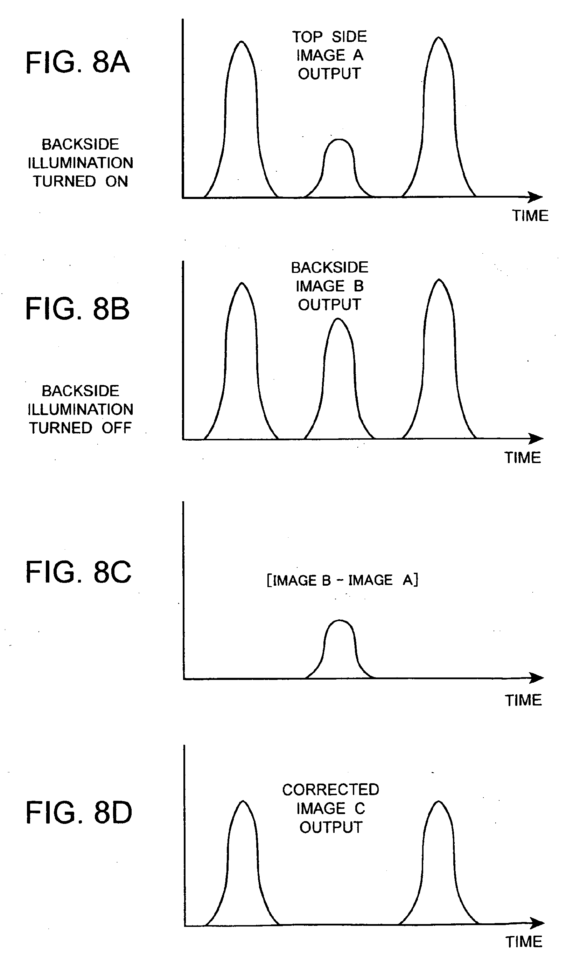

The first way of elimination will be explained in reference to FIG. 7, and FIGS. 8A ~ 8D.

FIG. 7 shows a document reader equipped with an image scanner 123 for scanning the top side of entry sheets, a top side illumination light 121, and a backside illumination light 131 for eliminating the effect of the backside transfer.

In this apparatus, when an image obtained from the top side with top side illumination light 121 turned on and backside illumination light 131 turned off is designated to Image A and an image obtained with top side illumination light 121 and top side illumination light 131 turned on is designated to Image B, then Image C eliminated the back-transfer image is obtained according to an equation (1) shown below.

$$C = A \cdot (B \cdot A) \, xK \; ... \; (1)$$

wherein K is a coefficient.

FIGS. 8A ~ 8D are diagrams for explaining the principle of eliminating back-transfer images according to FIG. 7. These diagrams show signal waveforms along scanning lines of respective images.

FIG. 8 A shows a waveform of Image A when backside illumination light 131 was turned off. The low peak at the central portion of this waveform expresses the back-transfer image.

FIG. 8B shows an image B when backside illumination light 131 was turned on. In this waveform, a back-transfer image is emphasized as the backside is illuminated.

FIG. 8C is a waveform of a differential image (Image B - Image A) that is a difference between both images. In this waveform, the back-transfer image only is extracted.

FIG. 8D is a waveform of a corrected image C that is obtained by increasing the waveform in FIG. 8C by multiplying K-times and then subtracting from the waveform shown in FIG. 8A. Thus, a waveform with the back-transfer image eliminated is obtained.

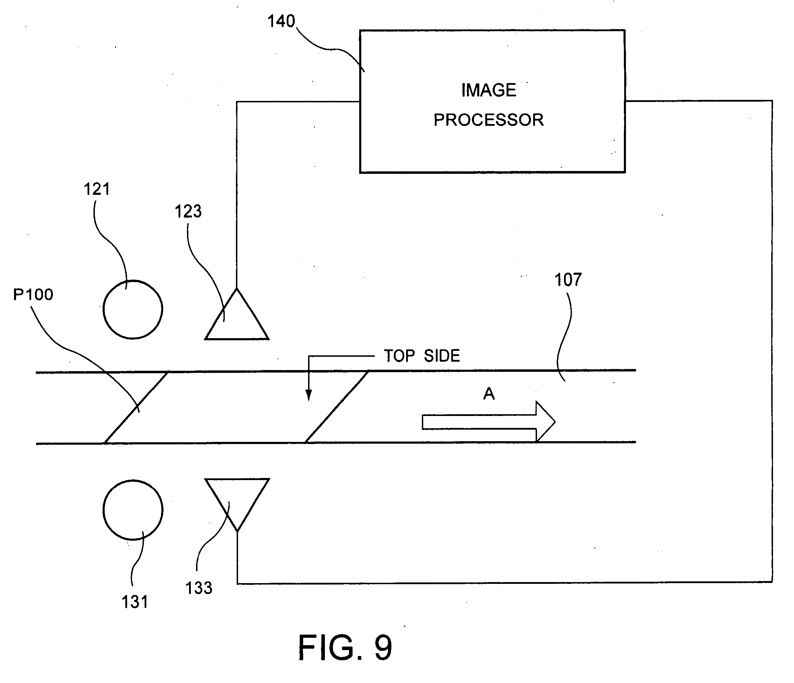

The second method will be explained with reference to FIG. 9 and FIGA. 10A ~ 10C.

FIG. 9 is an image processor to eliminate the effect of the back-image transfer based on the difference between the image shown on an entry sheet and an image shown on the backside.

When the Image A is read by top side image scanner 123 of this image processor and the backside image is read by backside image scanner 133, the image C with the back-transfer image eliminated is obtained by following equation (2).

$$C = A \cdot BxK \; ... \; (2)$$

wherein, K is a coefficient.

FIGS. 10A ~ 10C are diagrams for explaining the principle of the image processor to eliminate the effect of the back-transfer image shown in FIG. 9. These diagrams show signal waves on one scanning line of respective images.

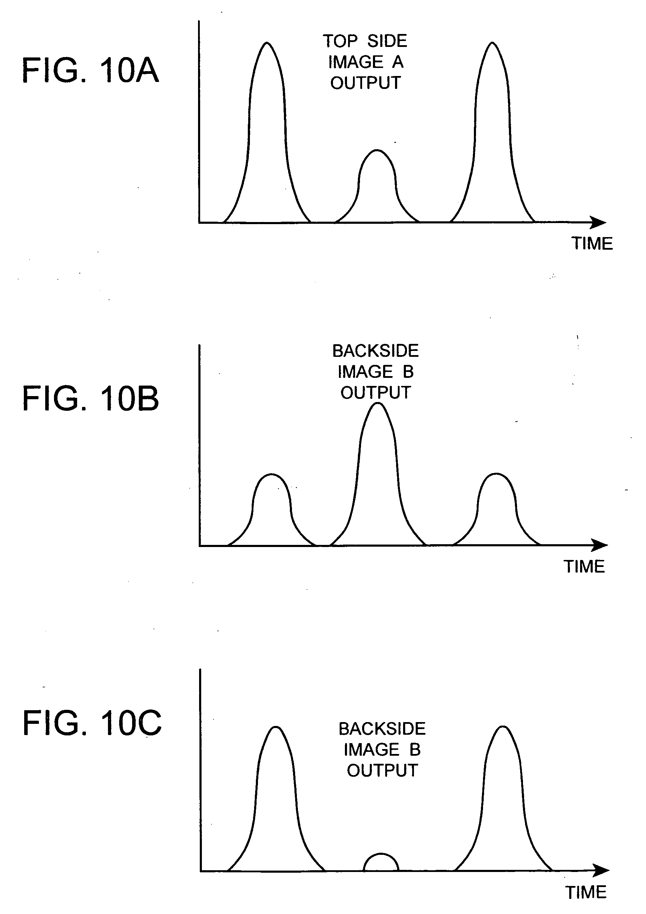

FIG. 10A shows the Image A read by top side image scanner 123. The low peak at the central portion of this waveform expresses the back-image B transferred on the top side.

FIG. 10B shows the waveform of the back-transfer image B read by backside image scanner 133. The low peaks at both ends of this waveform show the Image A that is transferred on the backside.

FIG. 10C shows the waveform of the corrected image C obtained by increasing the waveform shown in FIG. 10B by multiplying K times and then subtracting from the waveform shown in FIG. 10A. Thus, a waveform with the back-transfer image eliminated is obtained.

By the way, the document readers disclosed in the Japanese Patent Application Published No. 1997-135344 and the image processor disclosed in the Japanese Patent Application Publication No. 2003-78766 are involved in a copying machine.

However, when these conventionally available methods are applied to a character recognition apparatus, problems shown below can be produced.

Firstly, the image quality may be rather deteriorated when the back-transfer image eliminating process is executed.

Secondly, there are such defects that an unnecessary process of portions having no back-transfer image because the subtraction process is executed to the whole images and the image quality is rather deteriorated and the character recognition efficiency tends to drop.

Thirdly, an image is eliminated unnecessarily in a portion containing the back-transfer image, back-transfer image may be eliminated insufficiently and the character recognition efficiency tends to drop all the same.

Fourthly, a processing time becomes long because the process is executed on the entire of the entry sheet.

The present invention is made to solve the problems described above and a character recognition apparatus is provided, which is capable of recognizing characters high efficiently even when there are back-transfer images by conducting the back-transfer image elimination process only for the character recognition objective fields.

In order to achieve the above-mentioned object, one aspect of the character recognition apparatus according to the present invention comprises, field storage means provided for storing field data indicating specified fields on entry sheets, image scanner provided for reading images appearing on the top side and back-transfer images on the entry sheets, a back-transfer image processing means provided for processing back-transfer images in the specified fields read by the image scanner in reference to the field storage means and character recognition means provided for executing character recognitions for the images processed by the back-transfer image processing means.

A more complete appreciation of the present invention and many of the attendant advantages thereof will be readily obtained as the same becomes better understood by reference to the following detailed description when considered in connection with the accompanying drawings, wherein:

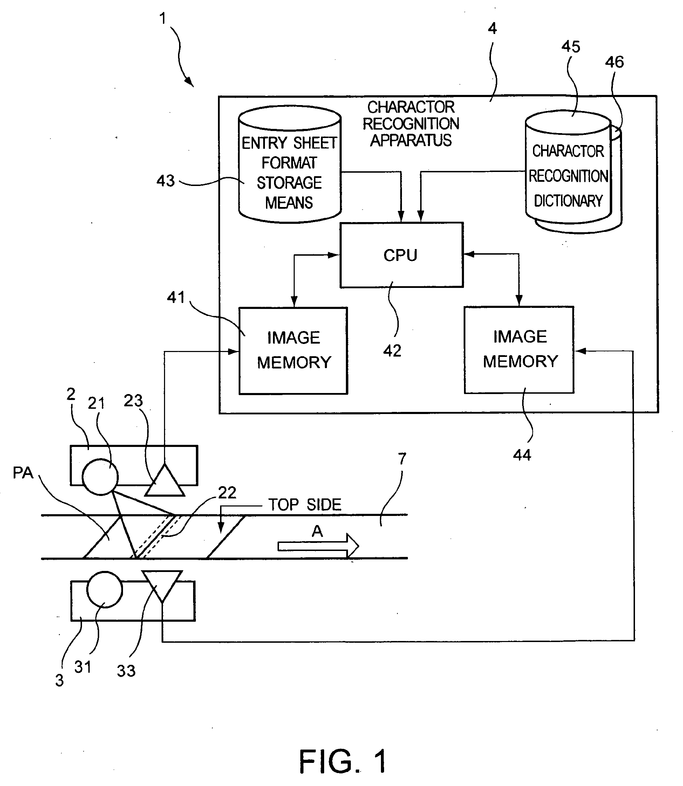

FIG. 1 is a block diagram showing a character recognition apparatus according to the first embodiment of the present invention;

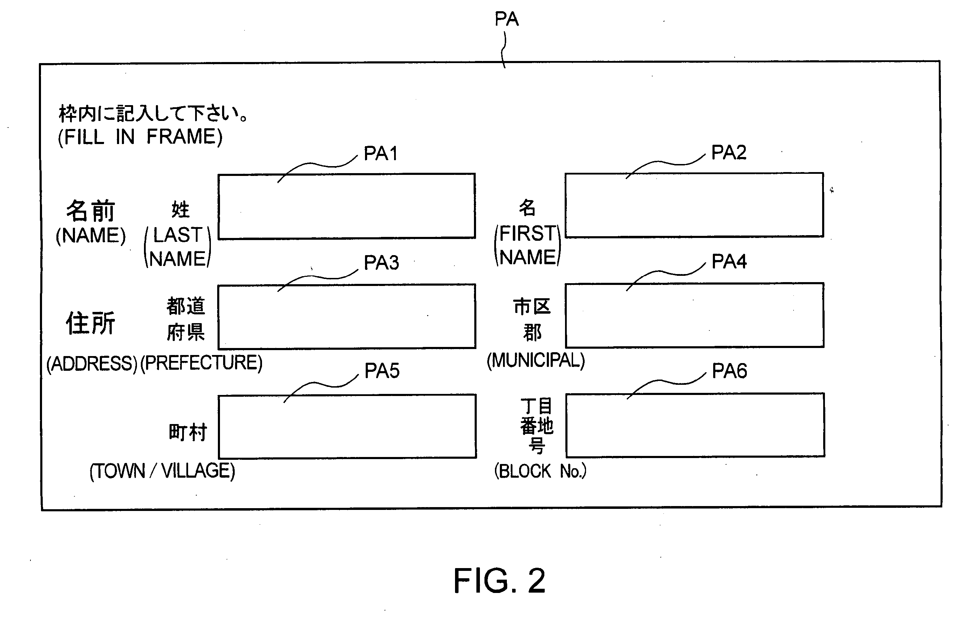

FIG. 2 is a schematic diagram showing one example of an entry sheet format subjected to be read by the apparatus shown in FIG. 1;

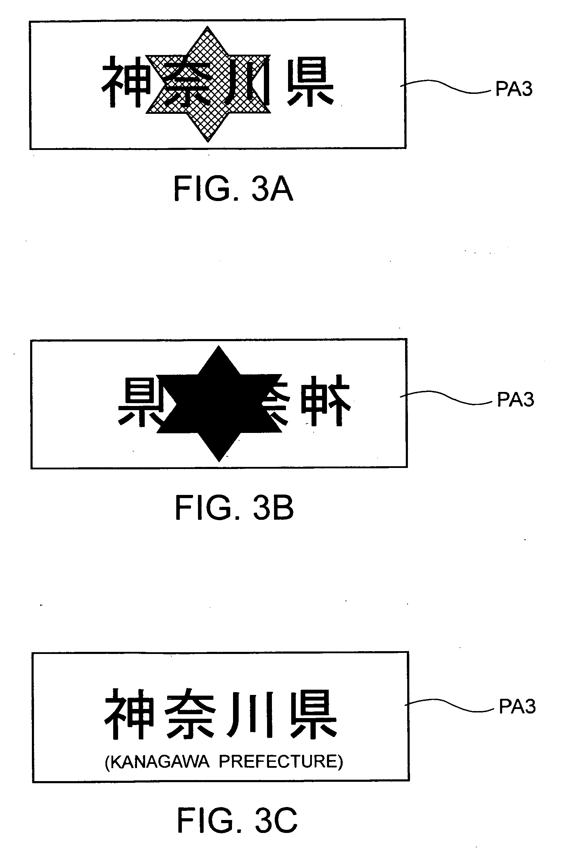

FIGS. 3A ~ 3C are schematic diagrams showing images appearing on the top side and the backside around the field having the back-transfer images;

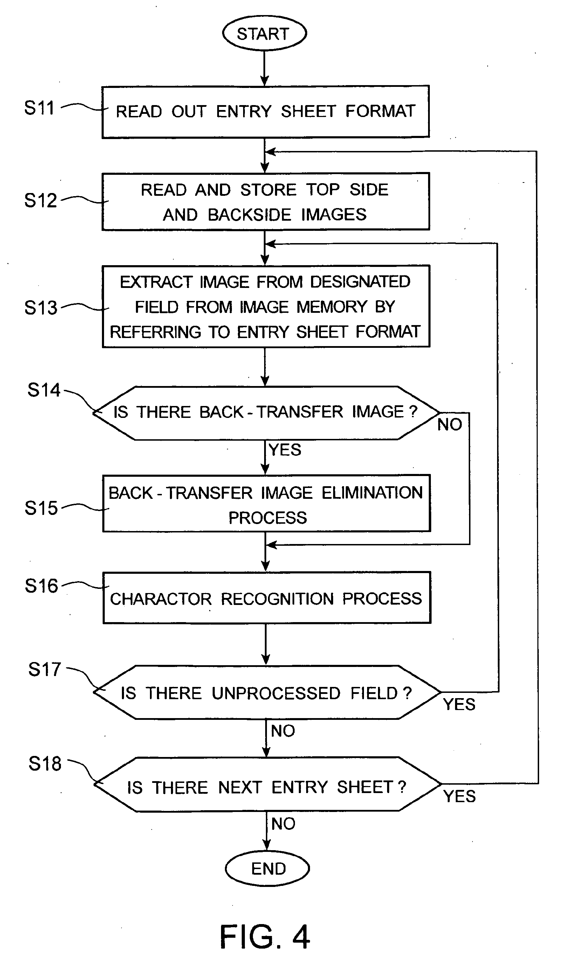

FIG. 4 is a flowchart showing the processing procedures of the first embodiment of the present invention;

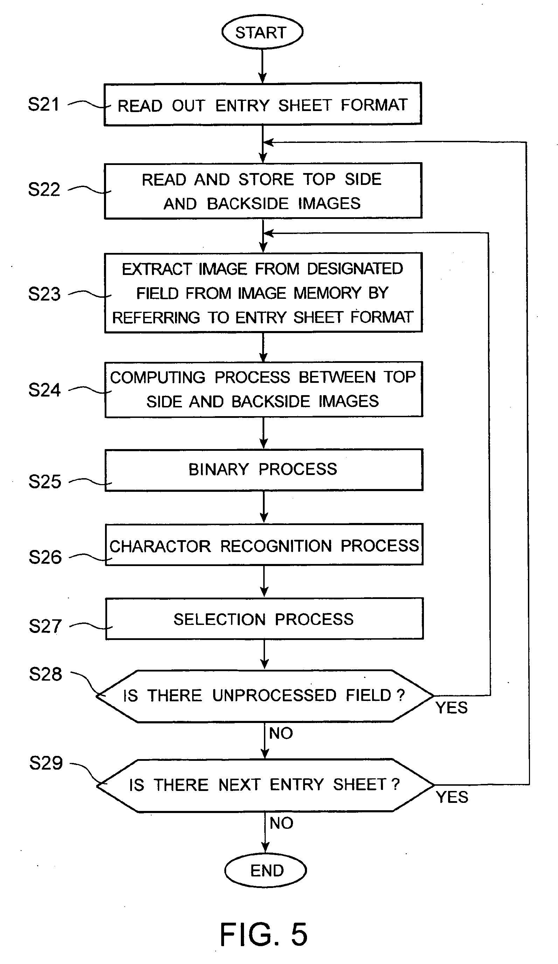

FIG. 5 is a flowchart showing the processing procedures of the second embodiment of the present invention;

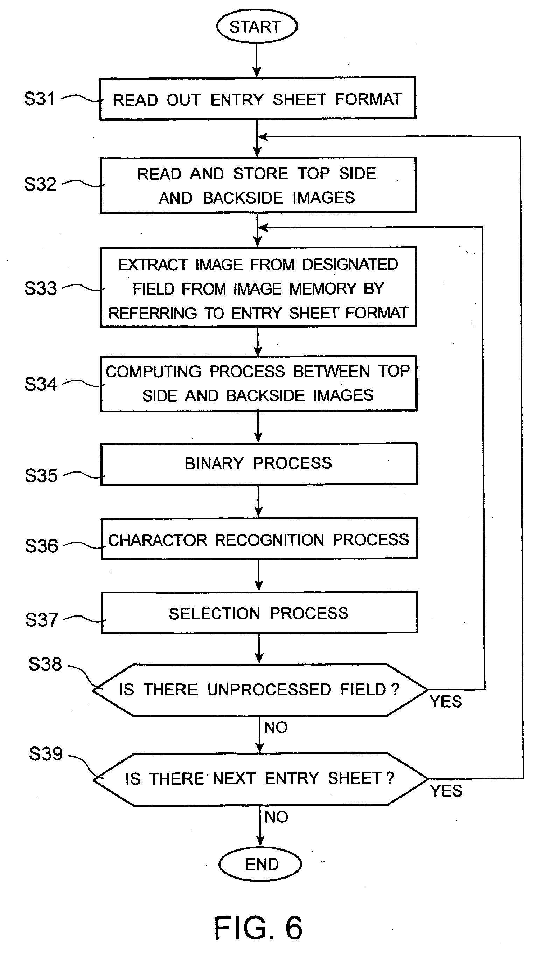

FIG. 6 is a flowchart showing the processing procedures of the third embodiment of the present invention;

FIG 7 is a schematic diagram for explaining a conventional document reader to eliminate the effect of a back-transfer image;

FIGS. 8A ~ 8D are schematic diagrams for explaining the principle of the document reader shown in FIG. 7;

FIG. 9 is a diagram for explaining another conventional image processor to eliminate the effect of back-transferring and

FIGS. 10A ~ 10C are schematic diagrams for explaining the principle of the image processor shown in FIG. 9.

The present invention will be described in detail with reference to the FIG. 1 through FIG.10C.

The preferred embodiments of the present invention will be explained below with reference to the attached drawings.

[First Embodiment]

FIG. 1 is a diagram showing the construction of character recognition apparatus 1 according to the first embodiment of the present invention.

This character recognition apparatus 1 is provided with a conveying means 7 for conveying a entry sheet, a top side scanner 2 to read the top side of the entry sheet PA conveyed by conveying means 7, a backside reading means 3 to read the backside of the entry sheet PA, and a character recognition means 4 to recognize characters of the image data read by top side reading means 2 and backside reading means 3.

Surface reading means 2 is provided with a top side illumination light 21 and a top side image scanner 23. Surface illumination light 21 illuminates the top side 22 of the entry sheet PA conveyed in the direction of the arrow sign A by conveying means 7. Surface image scanner 23 reads the data on the top side 22 illuminated by the top side illumination light 21 for every one line. The image data read by top side image scanner 23 is stored in a top side image memory 41 of character recognition means 4.

Backside reading means 3 is provided with a backside illumination light 31 and a backside image scanner 33. Backside illumination light 31 illuminates the backside (not sown) of the entry sheet PA. Backside image scanner 33 reads the backside data illuminated by backside illumination light 31 for every one line. The image data read by backside image scanner 33 is stored in a backside image memory 44 of character recognition means 4.

Character recognition means 4 is provided with an entry sheet format storage means 43, a character recognition dictionary 45, above-mentioned top side image memory 41, backside image memory 44, and a CPU (Central Processing unit) 42.

In the entry sheet format storage means 43, field data showing character recognition objective field on the entry sheet described later is pre-stored.

In character recognition dictionary 45, a character recognition dictionary for recognizing characters entered on entry sheets is stored.

CPU 42 reads field data corresponding to a character recognition objective field on an entry sheet and sets up a memory area in image memories 41, 44 applicable to the read out field data. Characters in the thus set-up memory area and character recognition dictionary 45 are recognized using, for example, a similarity method. Characters in the memory area set-up as aforesaid are recognized using, for example, a similarity method, by consulting with character recognition dictionaries.

Shown in FIG. 2 is an example of the entry sheet format of the entry sheet PA that becomes an object to the reading by this character recognition apparatus 1. A case wherein, for example, name and address are entered on this entry sheet PA will be explained.

In this case, the entry sheet PA has a last name entry field PA1, a first name entry field PA2, a prefecture entry field PA3, municipal entry field PA4, town/village entry field $PA_5$, and block number entry field PA6.

FIGS. 3A ~ 3C show images on the top side and backside when, for example, a "STAR" sign is printed in the backside of the prefecture entry field PA3 in connection with the entry sheet shown in FIG. 2.

FIG. 3A shows an image when the prefecture entry field PA3 of the entry sheet PA is read by top side reading means 2 and the status of a back-transfer image read with "STAR" sign that is the back-transfer image superposed on the image " 神奈川県 (Kanagawa Prefecture)" printed on the top side.

FIG. 3B shows the read image when the prefecture entry field PA3 of the entry sheet PA is read by backside reading means 3 and the state of the reversed image of 神奈川県 (Kanagawa Prefecture)" superposed on the "STAR" sign printed on the backside.

FIG. 3C shows an image after the back-transfer image eliminated from the read image shown in FIG. 3A, which is image data that is intended to obtain in this embodiment, as detailed later.

FIG. 4 is a flowchart showing the processing procedure of the first embodiment of the present invention and will be explained in order of 1.~ 8. shown below.

1. First, CPU 42 of the character recognition means 4 reads the entry sheet format of the entry sheet PA shown in FIG. 2 from the entry sheet format storage means, in which the format is registered (Step 11).

In this entry sheet format, plural field data showing positional coordinates of the character recognition objective fields in the entry sheet are registered. In the example of the entry sheet shown in FIG. 2, positional coordinates of last name entry field PA1, first name entry field PA2, prefecture entry field PA3, municipal entry field PA4, town/village entry field PA5, and block number entry field PA6 are registered, respectively.

2. Next, an image shown on the top side of this entry sheet is read by top side image scanner 23 of top side reading means 2 and stored in image memory 41 in character recognition mean 4 as a multi-level image A. On the other hand, a back-transfer image on the backside of the entry sheet PA is read by back-transfer image scanner 33 of backside reading means 3 and stored in image memory 44 in character recognition means 4 as a multi-level image B (Step S12).

3. CPU 42 extracts image in a field designated from image memory 41 with reference to the entry sheet format (Step S13). FIG. 3A is an example in which the top side image of the prefecture entry field was extracted. In this diagram, the back-transfer state of the "STAR" sign printed on the backside is shown.

4. In the same way, CPU 42 extracts the back-transfer image on the backside of the designated field from the image memory in reference to the entry sheet format in Step S13. FIG. 3B shows an example wherein the back-transfer image in the prefecture entry field was extracted. In this diagram, the "STAR" sign is clearly seen and the character string of 神奈川県 (Kanagawa Prefecture)" entered on the top side is reversed and back transferred.

5. Next, CPU 42 judges whether there are back-transfer images in the designated field or not (Step S14).

This judgment is executed by checking the number of pixels of back-transfer images that have density levels higher than a specified level, and is judged that there are back-transferred images when the number of pixels is higher than the specified number N

6. For the field that is judged to have back-transferred images (YES), the image elimination process is executed according to the above-mentioned equation (2) (Step S15). FIG. 3C shows an example wherein the back-transfer of image of the prefecture entry field was eliminated. On the other hand, when it is judged that there is no back-transfer image (NO), the back-transfer image elimination process is not executed for the aforesaid field.

7. Then, images in the designated fields are binary processed to segment respective character images, and characters are recognized by consulting the segmented character images with the character recognition dictionary (Step S16).

Then, CPU 42 checks entry sheets whether there is any unprocessed field or not (Step S17). When there is an unprocessed field (YES), the process returns to Step S13. When there is no unprocessed field (NO), the process proceeds to Step S18.

In Step S18, CPU 42 checks whether there is another entry sheet or not. When there is another entry sheet, the process returns to Step S12. When there is no entry sheet (NO), the character recognition process is finished (END).

In the above explanation, the method to repeat the process for all fields from Step S13 to Step S16 is explained. However, the same process may be executed to individual field for every step.

In the first embodiment described above, the back-transfer image elimination process based on a second method shown in the background art was used but the first method shown in the background art may be used.

Further, when the first method shown in the background art is used in the first embodiment, the presence of back-transfer images is judged according to the step shown below. That is, when an image obtained by turning off a backside illuminating light 31 is designated to A and an image obtained by turning the backside illuminating light on is B, the number of pixels more that a specified density level D of Image C (C = B·A) is checked and if the number of pixels is more than the specified level N, it is judged that there are back-transfer images.

[Second Embodiment]

FIG. 5 is a flowchart showing the processing procedure in the second embodiment of the present invention. The construction of a character recognition apparatus in this second embodiment is the same as that shown in FIG. 1 of the first embodiment.

The processing procedures in the second embodiment will be explained below for the entry sheet PA shown in FIG. 2 as an object similarly to the first embodiment in order of 1 ~ 9.

1. First, CPU 42 of character recognition apparatus 4 reads the entry sheet format of the entry sheet PA shown in FIG. 2 registered in entry sheet format storage means 43 (Step S21).

In this entry sheet format, plural field data showing the positional coordinates of fields of the entry sheet subject to the character recognition. In the example of the entry sheet shown in FIG. 2, positional coordinates of last name field PA1, first name field PA2, prefecture entry field PA3, municipal entry field PA4, town/village entry field PA5 and block number entry field PA6 are registered.

2. Next, a transfer-image the top side of this entry sheet is read by top side-image scanner 23 of top side reading means 2 and stored in image memory 41 in character recognition means 4 as a multi-level image A.

On the other hand, a back-transfer image of entry sheet PA is read by back-transfer image scanner 33 of backside reading means 3 and stored in image memory 44 of character recognition means 4 as a multi-level image B (Step S22).

3. With reference to an entry sheet, CPU 42 extracts a top side image in a designated field from image memory 41 (Step S23). FIG. 3A shows an example wherein a top side image of, for example, the prefecture field was thus extracted. In this diagram, the back transferred state of the "TAR" sign printed on the backside is shown.

4. In the similar way, CPU 42 extracts an image transferred on the backside around the designated field from image memory 44 with reference to the entry sheet format in Step S23. FIG. 3B shows an example wherein a back-transfer image of the prefecture field was thus extracted. In this diagram, the "STAR" sign is clearly seen and the character string "神奈川県 (Kanagawa Prefecture)" entered on the top side was back-transferred.

5. Next, the computation between the front-image A and the back-image B is executed using the second method shown in the background technology for the designated field (Step S24). The computed image (the first image) is stored in image memory 41. In the same way as the first embodiment, a back-transfer image of prefecture field PA 3 is eliminated as shown in FIG. 3C.

6. By applying the binary process to character images to which the back-transfer image elimination process (Step S25) is applied, character images are segmented and by consulting the cut-out character images with character recognition dictionary 45, characters are recognized (Step S26).

7. In the similar way, by applying the binary process to character images (the second image) to which no back-transfer image elimination process is applied, character images are segmented in Step S25, and character images segmented in Step S26 are consulted with character recognition dictionary 45 and the character recognition is executed.

8. Next, the result of the character recognition executed for the images applied with the back-transfer image elimination process is compared with the result of the character recognition executed for character images to which no back-transfer elimination process was executed (the evaluation means) and the character recognition result considered reasonable is selected as the final character recognition result (Step S27). In this selection, it is better to select, for example, the character recognition result of a larger mean level of the similarity. Further, it may be better to select a character recognition result hits in a word dictionary 46 when consulted with it. Such a word dictionary may be used when it is known that characters in a limited range, for example, "Prefectures" only are available.

Next, CPU 42 checks whether there are unprocessed fields on the entry sheet PA or not (Step S28). When there are unprocessed fields (YES), the process returns to Step S23. When there is no unprocessed field (NO), the process proceeds to Step 29.

In Step S29, CPU 42 checks whether there is a next entry sheet or not. When there is next entry sheet (YES), the process returns to Step S22. When there is no next entry sheet (NO), the character recognition process is finished (END).

In the above explanation, a method to repeat the process from step S 22 to step S 27 for images in all fields is explained but the same process may be executed to individual field for every step.

In the above second embodiment, the back-transfer image eliminating process based on the second method shown in the background technology was used. But, the process can be executed by using the first method shown in the background technology.

FIG. 6 is a flowchart showing the processing procedure in the third embodiment of the present invention. The character recognition apparatus in this third embodiment is in the same structure as that shown in FIG. 1 of the first embodiment.

Similarly to the first embodiment, the processing procedures of the third embodiment for the entry sheet PA shown in FIG. 2 will be explained below in order of 1 ~ 8.

1. First, CPU 42 of character recognition means 4 reads out the entry sheet format of the entry sheet PA shown in FIG. 2 registered in entry sheet format storage mean 43 (Step S31).

In this entry sheet format, plural field data showing positional coordinates of the character recognition objective fields in the entry sheet are registered. In an example of the entry sheet PA shown in FIG. 2, positional coordinates of last name entry field PA1, first name entry field PA2, prefecture entry field PA3, municipal entry field PA4, town/village entry field PA5, block number entry field PA6 are registered.

2. Next, a top side image of this entry sheet is read by top side image scanner 23 of top side reading means 2 and stored in image memory 41 of character recognition means 4 as a multi-level image A.

On the other hand, a back-transfer image on the backside of entry sheet PA is read by back-transfer image scanner 33 of backside reading means 3 and stored in image memory 44 in character recognition means 4 as a multi-level image B (Step S32).

3. CPU 42 extracts a top side image in a designated field from image memory 41 in reference to the entry sheet format (Step S33). FIG. 3A is an example of a top side image thus extracted from, for example, the prefecture entry field. In this diagram, the state of the back-transfer "STAR" sign printed on the backside is shown.

4. In the similar way, CPU 42 extracts a back-transfer image in the designated field from image memory 44 in reference to the entry sheet in Step S33. FIG.

3B is an example of back-transfer image thus extracted from, for example, the prefecture entry field. In this diagram, the "STAR" sign is clearly seen and the character string "神奈川県 (Kanagawa Prefecture)" entered on the top side is back transferred.

5. Next, CPU 42 makes the computation between the Image A and the backside image B using the second method shown in the background technology (Step S34).

In the third embodiment, the computation is executed by changing a parameter K of the above equation (2) and an image computed with plural kinds of back-transfer image eliminated is generated. Here, the parameter K is a parameter showing an intensity of eliminating back-transfer images. For example, the back-transfer image elimination process is executed by changing this parameter K to 4 kinds; for example, "0" (this is equivalent to no back-transfer image elimination), "0.1", "0.2", "0.3" and the optimum parameter is selected after verifying the results of these processes. Here, when an optimum parameter K is selected, the back-transfer image in the prefecture field can be eliminated as shown in FIG. 3C in the same way as in the first embodiment and the second embodiment.

6. Next, the binary process is applied to plural images after eliminating back-transfer images (Step S35), character images are segmented and character recognition is executed by consulting the segmented character images with character recognition dictionary 45 (Step S36).

7. Plural character recognition results thus obtained are compared (the evaluation means) and a character recognition result considered to be most reasonable is selected as the final character recognition result (Step S37). In this selection, it is better to select a character recognition result having the maximum mean level of similarity. Further, a character recognition result that hits the word dictionary 46 at the most high similarity when consulting with the word dictionary may be selected.

Next, CPU 42 checks whether there is an unprocessed field on the entry sheet PA or not (Step S38). If there is an unprocessed field (YES), the process returns to Step S33. If there is no unprocessed field (NO), the process proceeds to Step S39.

In Step S39, CPU 42 checks whether there is a next entry sheet or not. If there is a next entry sheet (YES), the process returns to Step S32. If there is no next entry sheet (NO), the character recognition process is finished (END).

In the above explanation, the processes from the back-transfer image extracting step (Step S33) to the recognition result output step (Step S37) for the image in a designated field for are repeated all fields, but the same process may be executed for individual field at every step.

In this third embodiment, the back-transfer image elimination process according to the second method shown in the background technology was used but the process can be achieved similarly by using the first method shown in the background technology.

According to this invention, it is possible to provide a character recognition apparatus which is capable of recognizing characters at the high efficiency even when there are back-transfer images by making the back-transfer image elimination process only for entry fields subject to the character recognition.

As described above, the present invention can provide an extremely preferable character recognition apparatus.

While there have been illustrated and described what are at present considered to be preferred embodiments of the present invention, it will be understood by those skilled in the art that various changes and modifications may be made, and equivalents may be substituted for elements thereof without departing from the true scope of the present invention. In addition, many modifications may be made to adapt a particular situation or material to the teaching of the present invention without departing from the central scope thereof. Therefore, it is intended that the present invention not be limited to the particular embodiment disclosed as the best mode contemplated for carrying out the present invention, but that the present invention includes all embodiments falling within the scope of the appended claims.

It is explicitly stated that all features disclosed in the description and/or the claims are intended to be disclosed separately and independently from each other for the purpose of original disclosure as well as for the purpose of restricting the claimed invention independent of the compositions of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

**Claims**

1. A character recognition apparatus, comprising:

   field storage means provided for storing field data indicating specified fields on entry sheets;
   image scanner provided for reading images appearing on the top side and back-transfer images on the entry sheets;
   back-transfer image processing means provided for processing back-transfer images in the specified fields read by the image scanner in reference to the field storage means; and
   character recognition means provided for executing character recognitions for the images processed by the back-transfer image processing means.

2. A character recognition apparatus according to claim 1, wherein the back-transfer image processing means comprises:

   back-transfer image extracting means provided for an extracting back-transfer image in a specified field by collating the image read by the image scanner with a field data stored in the field storage means; and
   back-transfer image eliminating means provided for eliminating the back-transfer image extracted by the back-transfer image extracting means.

3. A character recognition apparatus according to claim 1, wherein the character recognition means executes the character recognition by consulting an image before the back-transfer image elimination process and the image after the back-transfer elimination process with the character recognition dictionary, respectively and outputs the result hitting to character data in the character recognition dictionary.

4. A character recognition apparatus according to claim 1, wherein:

   the back-transfer image processing means is so constituted to execute the elimination process of the back-transfer images at the elimination strengths set at plural different levels for plural times;
   the character recognition means is so constructed to execute the character recognition of plural images processed by the back-transfer image elimination means;
   and wherein the apparatus further comprises:

   evaluation means provided for evaluating the recognition result recognized by the character recognition means; and
   selection means provided for selecting the best evaluated character recognition result by the evaluation means.

FIG. 1

枠内に記入して下さい。
(FILL IN FRAME)

PA1

名前　　姓
(NAME)　(LAST NAME)

PA2

名
(FIRST NAME)

住所　　都道府県
(ADDRESS)(PREFECTURE)

PA3

市区郡
(MUNICIPAL)

PA4

町村
(TOWN / VILLAGE)

PA5

丁目番地号
(BLOCK No.)

PA6

EP 1 705 602 A2

## FIG. 2

神奈川県 — PA3

FIG. 3A

県 奈 軒 — PA3

FIG. 3B

神奈川県
(KANAGAWA PREFECTURE) — PA3

FIG. 3C

START

S11 — READ OUT ENTRY SHEET FORMAT

S12 — READ AND STORE TOP SIDE AND BACKSIDE IMAGES

S13 — EXTRACT IMAGE FROM DESIGNATED FIELD FROM IMAGE MEMORY BY REFERRING TO ENTRY SHEET FORMAT

S14 — IS THERE BACK - TRANSFER IMAGE ? — NO

YES

S15 — BACK - TRANSFER IMAGE ELIMINATION PROCESS

S16 — CHARACTOR RECOGNITION PROCESS

S17 — IS THERE UNPROCESSED FIELD ? — YES

NO

S18 — IS THERE NEXT ENTRY SHEET ? — YES

NO

END

FIG. 4

START

S21 — READ OUT ENTRY SHEET FORMAT

S22 — READ AND STORE TOP SIDE AND BACKSIDE IMAGES

S23 — EXTRACT IMAGE FROM DESIGNATED FIELD FROM IMAGE MEMORY BY REFERRING TO ENTRY SHEET FORMAT

S24 — COMPUTING PROCESS BETWEEN TOP SIDE AND BACKSIDE IMAGES

S25 — BINARY PROCESS

S26 — CHARACTOR RECOGNITION PROCESS

S27 — SELECTION PROCESS

S28 — IS THERE UNPROCESSED FIELD ? — YES

NO

S29 — IS THERE NEXT ENTRY SHEET ? — YES

NO

END

# FIG. 5

START

S31 — READ OUT ENTRY SHEET FORMAT

S32 — READ AND STORE TOP SIDE AND BACKSIDE IMAGES

S33 — EXTRACT IMAGE FROM DESIGNATED FIELD FROM IMAGE MEMORY BY REFERRING TO ENTRY SHEET FORMAT

S34 — COMPUTING PROCESS BETWEEN TOP SIDE AND BACKSIDE IMAGES

S35 — BINARY PROCESS

S36 — CHARACTOR RECOGNITION PROCESS

S37 — SELECTION PROCESS

S38 — IS THERE UNPROCESSED FIELD ? —— YES

NO

S39 — IS THERE NEXT ENTRY SHEET ? —— YES

NO

END

# FIG. 6

FIG. 7

EP 1 705 602 A2

FIG. 8A

BACKSIDE
ILLUMINATION
TURNED ON

TOP SIDE
IMAGE A
OUTPUT

TIME

FIG. 8B

BACKSIDE
ILLUMINATION
TURNED OFF

BACKSIDE
IMAGE B
OUTPUT

TIME

FIG. 8C

[IMAGE B - IMAGE A]

TIME

FIG. 8D

CORRECTED
IMAGE C
OUTPUT

TIME

FIG. 9

EP 1 705 602 A2

**FIG. 10A**

TOP SIDE
IMAGE A
OUTPUT

TIME

**FIG. 10B**

BACKSIDE
IMAGE B
OUTPUT

TIME

**FIG. 10C**

BACKSIDE
IMAGE B
OUTPUT

TIME